**Europäisches Patentamt**

**European Patent Office**

**Office européen des brevets**

(19)

(11) Veröffentlichungsnummer: **0 172 996**
**B1**

(12) # EUROPÄISCHE PATENTSCHRIFT

(45) Veröffentlichungstag der Patentschrift:
**26.10.88**

(51) Int. Cl.⁴: **F 16 L 37/28**, F 16 L 37/00

(21) Anmeldenummer: **85106330.5**

(22) Anmeldetag: **23.05.85**

(54) Schnellkupplung für ein Doppelcontainment-Fluidleitungssystem.

(30) Priorität: **28.05.84 LU 85379**

(43) Veröffentlichungstag der Anmeldung:
**05.03.86 Patentblatt 86/10**

(45) Bekanntmachung des Hinweises auf die Patenterteilung:
**26.10.88 Patentblatt 88/43**

(84) Benannte Vertragsstaaten:
**AT BE CH DE FR GB IT LI LU NL SE**

(56) Entgegenhaltungen:
**US - A - 2 962 303**
**US - A - 3 171 448**
**US - A - 3 314 447**
**US - A - 3 731 705**

(73) Patentinhaber: **EUROPÄISCHE ATOMGEMEINSCHAFT (EURATOM)**, Bâtiment Jean Monnet Plateau du Kirchberg Boîte Postale 1907, L-1019 Luxembourg (LU)

(72) Erfinder: **Keller, Roman, J.v. Soorelpark 73, NL-1871 EZ Schoorl (NL)**

(74) Vertreter: **Weinmiller, Jürgen, Lennéstrasse 9 Postfach 24, D-8133 Feldafing (DE)**

**Beschreibung**

Die Erfindung bezieht sich auf eine Schnellkupplung für ein Doppelcontainment-Fluidleitungssystem, bei dem eine innere Leitung koaxial in einer Hülleitung verläuft, wobei die Kupplung aus einem ersten Steckerteil mit einem ersten federbelasteten Verschlussstück zum selbsttätigen Verschluss der inneren Leitung im entkuppelten Zustand und aus einem zweiten Steckerteil mit einem zweiten federbelasteten Verschlussstück zum selbsttätigen Verschluss von deren innerer Leitung im entkuppelten Zustand besteht und wobei die beiden Verschlussstücke sich in Kuppelstellung gegeneinander abstützen und somit offenhalten. Eine solche Schnellkupplung ist z.B. aus der US-A 3 171 448 bekannt. Sie dient insbesondere dem Absaugen von Benzindämpfen aus einem Tankstutzen.

Es ist auch bekannt, dass hochgiftige Gase und Flüssigkeiten in Doppelcontainment-Leitungssystemen transportiert werden. Solche Leitungssysteme bestehen aus einer inneren, das giftige Fluid umschliessenden Leitung und aus einer diese koaxial vollständig umhüllenden äusseren Leitung, in der in der Regel ein Schutzgas strömt. Die Dichtheit der inneren Leitung kann durch Überwachung der Schutzgaszusammensetzung laufend kontrolliert werden. Tritt ein Leck in der inneren Leitung auf, dann wird nur das Schutzgas in der Hülleitung kontaminiert, und man kann die nötigen Massnahmen ergreifen, ehe die Gefahr besteht, dass der giftige Stoff ganz nach aussen gelangt.

Die Erfindung bezieht sich auf die Kupplung solcher Leitungen. An die Konstruktion solcher Kupplungen werden hohe Sicherheitsanforderungen gestellt. Man muss einerseits die beiden inneren Leitungen miteinander und die beiden Hülleitungen miteinander dicht verbinden; man muss zweitens dafür sorgen, dass im entkuppelten Zustand die beiden Innenleitungen dicht verschlossen sind und der Verschluss auch nicht unbeabsichtigt gelöst werden kann, drittens muss man sicherstellen, dass die Verbindung der äusseren Leitungen beim Kuppelvorgang bereits hergestellt ist, ehe die beiden inneren Leitungen miteinander in Verbindung treten, und schliesslich muss beim Entkuppeln erst die Trennung der beiden inneren Leitungen und deren Verschluss erfolgen, ehe die Hülleitung aufgetrennt werden darf.

In diesem Zusammenhang ist auf die US-A 3 731 705 zu verweisen, aus der eine Schnellkupplung für einfache Rohrleitungen bekannt ist. Hier kann man von aussen auf innere Verschlussorgane einwirken, so dass die beiden Rohrleitungen bereits getrennt sind und der Trennbereich drucklos ist, ehe die Kupplung ganz geöffnet wird.

Aufgabe der Erfindung ist es, eine Schnellkupplung anzugeben, die alle obigen Forderungen erfüllt und die zudem einfach zu bedienen und gegen Fehlbedienungen geschützt ist.

Diese Aufgabe wird durch die im Anspruch 1 gekennzeichnete Schnellkupplung gelöst.

Bezüglich von Merkmalen bevorzugter Ausführungsformen der Erfindung wird auf die Unteransprüche verwiesen.

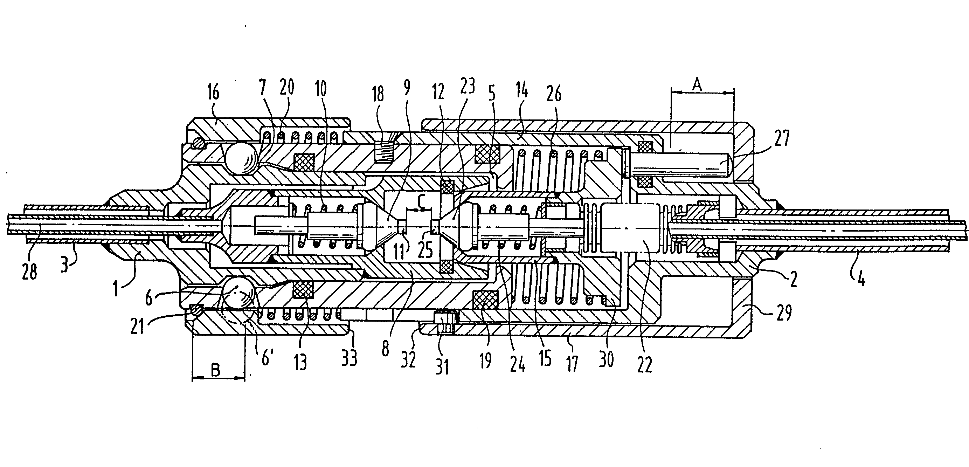

Nachfolgend wird die Erfindung anhand dieses bevorzugten Ausführungsbeispiels mithilfe der einzigen Zeichnung näher erläutert, die einen Schnitt durch die erfindungsgemässe Schnellkupplung zeigt.

Die Schnellkupplung besteht aus zwei Steckerteilen, einem ersten Steckerteil 1 und einem zweiten Steckerteil 2. Jedes der beiden Steckerteile ist an ein Ende einer Doppelcontainment-Leitung 3 bzw. 4 angeschlossen, im vorliegenden Beispiel angeschweisst.

In der Figur ist die Schnellkupplung in einer Stellung gezeigt, in der die beiden Steckerteile zwar ineinandergesteckt sind, die endgültige Verbindung der beiden Innenleitungen aber noch nicht erfolgt ist. Das erste Steckerteil sitzt in einer Höhlung 5 des zweiten Steckerteils 2 und ist dort mithilfe von Einrastkugeln 6 blockiert, die in eine Ringrinne 7 des Körpers des ersten Steckerteils eingreifen. Der Körper des ersten Steckerteils endet stirnseitig in einem zylinderrohrförmigen Kelch 8, an dessen Grund ein erstes Verschlussstück 9 für die innere Leitung sitzt. Dieses Verschlussstück wird von einer Feder 10 in die Verschlussstellung im Grunde des Kelchs hineingedrückt und ragt mit einem Vorsprung 11 in den Kelch hinein.

Die in das erste Steckerteil mündende Hülleitung verläuft auch in diesem Steckerteil konzentrisch ausserhalb der Innenleitung, d.h. dass das Schutzgas frei den Kelch aussen umfliesst. Im Bereich des inneren Kelchrandes ist ein Dichtungsring 12 eingelassen, der, wie später noch erläutert wird, in der Kuppelstellung die Abdichtung der Verbindung der beiden inneren Leitungen bewirkt.

Das erste Steckerteil 1 steckt in der gezeigten Lage nahezu vollständig in der Höhlung 5 des zweiten Steckerteils und füllt diese aus. Eine in die Wandung der Höhlung 5 des zweiten Steckerteils eingelassene Dichtung 13 dichtet die Höhlung, in der sich gegebenenfalls Schutzgas befindet, nach aussen ab.

Das zweite Steckerteil 2 besteht im wesentlichen aus vier gegeneinander beweglichen Teilen, nämlich einem Gehäuse 14, einem zylindrischen, axial gegenüber dem Gehäuse verschiebbaren Kopfstück 15 und zwei äusseren Betätigungsringen 16, 17, die in axialer Richtung aufeinanderfolgend auf dem Gehäuse 14 sitzen und dieses nahezu vollständig umschliessen.

Das Gehäuse besteht aus konstruktiven Gründen aus zwei miteinander über radiale Schrauben 18 fest verbundenen und über eine Ringdichtung 19 gegenseitig abgedichteten Teilen.

Die Einrastkugeln 6 werden von dem Betätigungsring 16 in der dargestellten Lage festgehalten. Der Betätigungsring wird von einer sich am Gehäuse 14 abstützenden Feder 20 in axialer Richtung gegen einen Sprengring 21 gedrückt.

Der Betätigungsring 16 kann gegen die Kraft der Feder 20 um eine Strecke B verschoben werden, die so gewählt ist, dass dann die Kugeln in die gestrichelte Stellung 6' gelangen können. Wird der Betätigungsring dann wieder losgelassen, schnellt er wieder in die gezeichnete Lage zurück und drückt die Kugeln wieder radial nach innen.

Das bewegliche Kopfstück 15 des zweiten Steckerteils besitzt eine dem Kelch 8 angepasste Zylinderrohrform, derart, dass das Kopfstück in den Kelch hineingeschoben werden kann und dabei eine Abdichtung zwischen der Zylinderfläche des Kopfstücks und dem Dichtungsring 12 erfolgt. Das Kopfstück ist hohl und über einen flexiblen Faltenbalg 22 mit der inneren Leitung des Doppelcontainment-Leitungssystems 4 verbunden. In dem Kopfstück sitzt ein zweites Verschlussstück 23 ähnlich dem ersten Verschlussstück 9 und verschliesst die Stirnseite des Kopfstücks aufgrund der Kraft, mit der eine Feder 24 das Verschlussstück 23 in die Verschlussstellung drückt. Auch dieses Verschlussstück besitzt stirnseitig einen Vorsprung 25, der in der noch zu beschreibenden endgültigen Koppelstellung an dem Vorsprung 11 des anderen Verschlussstücks anliegt, so dass sich beide gegen die Kraft ihrer Federn 10 und 24 von ihrer Verschlussstellung lösen.

Das Kopfstück 15 wird durch eine Feder 26, die sich zwischen den beiden Teilen des Gehäuses 14 befindet, in Abwesenheit äusserer Kräfte in die in der Figur dargestellte Lage gezogen, in der die beiden Verschlussstücke ein Abstand C voneinander aufweisen. Mehrere Stössel 27, die abgedichtet durch das Gehäuse 14 in einer zur Achse 28 der beiden Leitungssysteme und der Schnellkupplung parallelen Richtung hindurchgeführt sind, ermöglichen die Verschiebung des Kopfstücks 15 von aussen. Hierzu liegt das äussere Ende der Stössel 27 an einem Kragen 29 des Betätigungsrings 17 an, während das innere Ende der Stössel gegen eine Grundplatte 30 des Kopfstücks 15 drückt. Wird also der Betätigungsring 17 in der Figur nach links verschoben, dann drücken die Stössel 27 die Grundplatte 30 und das Kopfstück 15 ebenfalls nach links, so dass nach einer Verschiebung um den Wert C der Vorsprung 25 mit dem Vorsprung 11 in Berührung kommt und danach die beiden Verschlussstücke 9 und 23 von ihrem Dichtungssitz abheben. Die Gesamtverschiebung des Kopfstücks wird mit A bezeichnet.

Der Betätigungsring 17 ist mit einer Bajonettführung 31 versehen, die aus mindestens einem Zapfen am Betätigungsring und einer abgewinkelten Führungsrinne am Gehäuse gebildet wird. Aufgrund dieser Bajonettführung 31 kann der Betätigungsring 17 in axialer Richtung nur um die Strecke A verschoben werden und lässt sich dann durch leichte Drehung in einer Stellung einrasten, in der die beiden Verschlussstücke sich gegenseitig abstützen und von ihren Dichtungssitzen abheben. In dieser Stellung liegt die Vorderkante 32 des Betätigungsrings 17 in unmittelbarer Nähe der Vorderkante 33 des Betätigungsrings 16. Letzterer kann also dann nicht mehr soweit verschoben werden, dass die Einrastkugeln 6 das erste Steckerteil 1 freigeben. Somit ist auf einfache Weise gewährleistet, dass nicht durch unbeabsichtigte Fehlmanipulationen das erste Steckerteil herausgezogen wird, ehe das zweite Verschlussstück 23 zurückgezogen wurde und die beiden inneren Teilleitungen gegeneinander verschlossen wurden. Der Betätigungsring 16 für die Entsperrung des ersten Steckerteils kann vielmehr erst verschoben werden, wenn der Betätigungsring 17 in die in der Figur gezeichnete Stellung gelangt ist und damit die Trennung der beiden inneren Leitungshälften bereits vollzogen wurde. So kann das Kelchinnere, das gegebenenfalls von dem giftigen Fluid der inneren Leitung kontaminiert ist, mit Schutzgas geflutet und damit ausreichend dekontaminiert werden, ehe das erste Steckerteil 1 ganz von dem zweiten Steckerteil gelöst wird. Das Schutzgas kann sowohl in der Kuppelstellung als auch in der gezeigten Übergangsstellung frei durch die ganze Kupplung fliessen. In besonders kritischen Fällen empfiehlt es sich, beim Auftrennen der Kupplung das Schutzgas nach der Betätigung des Ringes 17, aber vor der Betätigung des Ringes 16, noch eine gewisse Zeit weiter fliessen zu lassen, um die nach dem Auftrennen der inneren Leitung im Kelch noch vorhandenen Giftgasreste herauszuspülen.

Wie man aus der Figur erkennt, bildet die erfindungsgemässe Schnellkupplung eine handliche, kompakte und bedienungsfreundliche Einheit. In einer praktischen Ausführungsform besitzt die Schnellkupplung eine Länge von 85 mm und einen Durchmesser über alles von 27,5 mm. In diesem Fall wird der Wert A mit 8 mm, der Wert B mit 7 mm und der Wert C mit 3,5 mm festgelegt.

Die Erfindung ist nicht auf das im einzelnen dargestellte bevorzugte Ausführungsbeispiel beschränkt. So können die einzelnen Bauteile der Schnellkupplung auch aus mehreren miteinander verschraubten oder verschweissten Einzelteilen bestehen.

Die Verbindung des Kopfstücks 15 mit der inneren Leitung des Leistungssystems 4 kann auch über eine andere flexible Leitung oder über eine dynamische Dichtung erfolgen, wenn keine Sicherheitsaspekte dagegen sprechen. Die Betätigungsringe 16 und 17 können auch anders gestaltet sein, beispielsweise als Schieber, die sich entlang einer Mantellinie der Kupplung erstrecken. Auf die Feder 26 könnte auch verzichtet werden, wenn die Stössel 27 auch zur Übertragung von Zugkräften geeignet sind. Auch die Feder 20, die lediglich den Bedienungskomfort erhöht, könnte gegebenenfalls entfallen.

## Patentansprüche

1. Schnellkupplung für eine Doppelcontainment-Fluidleitungssystem, bei dem eine innere Leitung koaxial in einer Hülleitung verläuft, wobei die Kupplung aus einem ersten Steckerteil (1) mit einem ersten federbelasteten Verschlussstück (9) zum selbsttätigen Verschluss der inneren Leitung im entkuppelten Zustand und aus einem zweiten Steckerteil (2) mit einem zweiten federbelasteten Verschlussstück (23) zum selbsttätigen Verschluss von deren innerer Leitung im entkuppelten Zustand besteht und wobei die beiden Verschlussstücke sich in Kuppelstellung gegeneinander abstützen und somit offenhalten, dadurch gekennzeichnet, dass das erste Steckerteil (1) stirnseitig in einem zylinderrohrförmigen Kelch (8) endet, an dessen Grund die innere Leitung über das erste Verschlussstück (9) mündet und der insgesamt in eine stirnseitige Höhlung (5) des zweiten Steckerteils (2) einschiebbar und dort blockierbar ist, dass das zweite Steckerteil (2) ein axial verschiebbares zylindrisches Kopfstück (15) aufweist, das über einen Faltenbalg (22) an die zugeordnete, im zweiten Steckerteil (2) ortsfest verankerte innere Leitung des Systems (4) angeschlossen ist, das an seiner Stirnseite das zweite Verschlussstück (23) trägt und das in den zylinderrohrförmigen Kelch (8) dicht hineinpasst, und dass das zweite Steckerteil (2) ausserdem zwei axial verschiebbare Betätigungsglieder (16, 17) trägt, von denen das erste (16) die Blockierung des ersten Steckerteils (1) in der Kuppelstellung bzw. die Freigabe dieses Steckerteils, und das zweite (17) die axiale Verschiebung des Kopfstücks (15) bewirkt, wobei die beiden Betätigungsglieder so zusammenwirken, dass sich nicht gleichzeitig das Kopfstück (15) des zweiten Steckerteils (2) im Kelch (8) des ersten Steckerteils (1) und das erste Betätigungsglied (16) in der Freigabestellung befinden können, in der das erste Steckerteil (1) aus der Höhlung (5) des zweiten Steckerteils (2) entfernbar ist.

2. Schnellkupplung nach Anspruch 1, dadurch gekennzeichnet, dass die beiden Betätigungsglieder (16, 17) als Ringe ausgebildet sind, die axial voreinander auf dem Gehäuse (14) des zweiten Steckerteils (2) sitzen und zwischen jeweils zwei Endstellungen verschiebbar sind, von denen jeweils eine mit einer Endstellung des anderen Rings kollidiert.

3. Schnellkupplung nach einem der Ansprüche 1 bis 2, dadurch gekennzeichnet, dass das Kopfstück (15) mit einer Feder (26) zusammenwirkt, die es zusammen mit dem zweiten Betätigungsglied (17) in die bezüglich des ersten Steckerteils (1) zurückgezogene Endstellung drückt, und dass Mittel (31) zur Arretierung des zweiten Betätigungsglieds (17) in der anderen Endstellung vorgesehen sind.

4. Schnellkupplung nach einem der Ansprüche 1 bis 3, dadurch gekennzeichnet, dass das erste Betätigungsglied (16) mit einer Feder (20) zusammenwirkt, die es in die Blockierstellung drückt.

5. Schnellkupplung nach einem der Ansprüche 1 bis 4, dadurch gekennzeichnet, dass das Kopfstück (15) über mindestens einen parallel zur Steckerachse beweglichen Stössel (27) an das zweite Betätigungsglied (17) gekoppelt ist.

6. Schnellkupplung nach einem der Ansprüche 1 bis 5, dadurch gekennzeichnet, dass ein Dichtungsring (12) am Innenrand des Kelches (8) angeordnet ist, der mit der Zylinderfläche des Kopfstücks (15) dichtend zusammenwirkt.

**Claims**

1. A quick coupling for a double-walled fluid pipe system, in which an inner pipe extends coaxially in an envelopping pipe and the coupling consists of a first plug member (1) with a first spring-loaded obturation member (9) for automatically closing the inner pipe in the uncoupled state, and of a second plug member (2) with a second spring-loaded obturation member (23) for automatically closing its inner pipe in the uncoupled state, both coupling members abutting against each other when the plugs are coupled and thereby keeping themselves open, characterized in that the first plug member (1) terminates with its end face in a cylindrical, tube-shaped bell (8), into the bottom of which opens the inner pipe through the first obturation member (9) and which as a whole is adapted to be inserted into a cavity (5) at the front face of the second plug member (2) and to be locked therein, that the second plug member (2) is provided with a cylindrical headpiece (15) adapted to be displaced in axial direction and connected via a bellow (22) to the associated inner pipe of the system (4) which pipe is rigidly anchoured in the second plug member (2) and carries at its front face the second obturation member (23) which fits tightly into the cylindrical tube-shaped bell (8), and that in addition the second plug member (2) carries two axially movable actuator members (16, 17), the first one (16) of which effectuates the locking of the first plug member (1) in the coupling position or the liberation of this plug member respectively, and the second one (17) of which effectuates the axial displacement of the headpiece (15), the two actuator members cooperating in such a manner that the headpiece (15) of the second plug member (2) is not admitted to be present in the bell (8) of the first plug member (12), if simultaneously the first actuator member (16) is in the unlocked position, in which the first plug member (1) is allowed to be retracted from the cavity (5) of the second plug member (2).

2. A quick coupling according to claim 1, characterized in that the two actuator members (16, 17) are constituted by rings, seated on the housing (14) of the second plug member (2) at a distance from one another, and being able to slide between two terminal positions, of terminal position of each ring colliding with one terminal position of the other ring.

3. A quick coupling according to one of claims 1 and 2, characterized in that the headpiece (15) cooperates with a spring (26), which urges the headpiece together with the second actuator member (17) into that terminal position which is retracted in relation to the first plug member (1), and that means (31) are provided for arresting the second actuator member (17) in the other terminal position.

4. A quick coupling according to one of claims 1 to 3, characterized in that the first actuator member (16) cooperates with a spring (20) which urges this member into the locking position.

5. A quick coupling according to one of claims 1 to 4, characterized in that the headpiece (15) is coupled to the second actuator member (17) via at least one tappet (27), which can be moved parallel to the plug axis.

6. A quick coupling according to one of claims 1 to 5, characterized in that a seal ring (12) is disposed at the inner rim of the bell (8), which ring cooperates with the cylindrical surface of the headpiece (15).

**Revendications**

1. Raccord du type rapide pour un système de conduites à double paroi, dans lequel une conduite intérieure s'étend coaxialement dans une conduite enveloppante, le raccord étant constitué par une première fiche (1) comprenant un premier corps obturateur (9) chargé par un ressort et destiné à fermer automatiquement la conduite intérieure dans la position desaccouplée, et par une seconde fiche (2) comprenant un second corps d'obturation (23) chargé par un ressort et destiné à fermer automatiquement sa conduite intérieure dans la position désaccouplée, les deux corps obturateurs s'appuyant mutuellement l'un sur l'autre en position accouplée, se tenant ainsi en état ouvert, caractérisé en ce que la première fiche (1) se termine du côté frontal par un calice (8) cylindrique tubulaire, dans le fond duquel débouche la conduite intérieure à travers le premier corps d'obturation (9) et qui, elle, est susceptible à être insérée complètement dans une cavité (5) frontale de la seconde fiche (2) et à y être arrêtée, que la seconde fiche (2) est pourvue d'une pièce de tête cylindrique (15) susceptible d'être déplacée axialement, cette pièce de tête étant connectée par l'intermédiaire d'un soufflet (22) à la conduite intérieure respective du système (4), qui est fixée de façon stationnaire dans la seconde fiche (2), la pièce portant sur son front le second corps d'obturation (23) et chaussant de façcon étanche le calice (8) cylindrique tubulaire, que la seconde fiche (2) porte en outre deux éléments d'actionnement (16, 17) axialement mobiles, dont le premier (16) effectue le blocage de la première fiche (1) dans la position d'accouplement ou le déblocage de cette composante respectivement, et dont le second (17) effectue le déplacement axial de la pièce de tête (15), les deux éléments d'actionnement coopérant de telle façon que la pièce de tête (15) de la seconde fiche (2) ne se retrouve pas dans le calice (8) de la première fiche (1) en même temps que se trouve le premier élément d'actionnement (16) en position de désaccouplement, à partir de laquelle la première fiche (1) peut être retirée de la cavité (5) de la seconde fiche (2).

2. Raccord rapide selon la revendication 1, caractérisé en ce que les deux éléments d'actionnement (16, 17) sont construits sous forme d'anneaux sis sur le boîtier (14) de la seconde fiche (1) l'un à distance derrière l'autre et susceptibles à être déplacés entre deux positions terminales, l'une de ces positions de chaque anneau interférant avec une position terminale de l'autre anneau.

3. Raccord rapide selon l'une des revendications 1 à 2, caractérisé en ce que la pièce de tête (15) coopère avec un ressort (26), qui la pousse ensemble avec le second élément d'actionnement (17) vers la position terminale, cette dernière étant en retrait par rapport à la fiche (1), et que des moyens (31) sont prévus pour bloquer le second élément d'actionnement (17) vers l'autre position terminale.

4. Raccord rapide selon l'une des revendications 1 à 3, caractérisé en ce que le premier élément d'actionnement (16) coopère avec un ressort (20), que le pousse vers la position de blocage.

5. Raccord rapide selon l'une des revendications 1 à 4, caractérisé en ce que la pièce de tête (15) est accouplée au second élément d'actionnement (17) par l'intermédiaire d'au moins un poussoir (27) disposé parallèlement à l'axe du raccord.

6. Raccord rapide selon l'une des revendications 1 à 5, caractérisé en ce qu'un joint annulaire (12) est disposé au bord intérieur du calice (8), ce joint coopérant de façon étanche avec la surface cylindrique de la pièce de tête (15).